(19) Europäisches Patentamt / European Patent Office / Office européen des brevets

(11) EP 4 768 523 A1

(12) **EUROPEAN PATENT APPLICATION**
published in accordance with Art. 153(4) EPC

(43) Date of publication:
**01.07.2026 Bulletin 2026/27**

(21) Application number: **24859624.9**

(22) Date of filing: **23.08.2024**

(51) International Patent Classification (IPC):
***C08J 3/16*** *(2006.01)* ***C08F 8/06*** *(2006.01)*
***C08F 20/34*** *(2006.01)* ***C08L 29/04*** *(2006.01)*
***C08L 33/14*** *(2006.01)*

(52) Cooperative Patent Classification (CPC):
**C08F 8/06; C08F 20/34; C08J 3/16; C08L 29/04; C08L 33/14**

(86) International application number:
**PCT/JP2024/029922**

(87) International publication number:
**WO 2025/047591 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.08.2023 JP 2023136705**

(71) Applicant: **Kuraray Co., Ltd.**
**Kurashiki-shi, Okayama 710-0801 (JP)**

(72) Inventors:
- **UMEDA, Yasunari**
**Tainai-shi, Niigata 959-2691 (JP)**
- **SATO, Kei**
**Tainai-shi, Niigata 959-2691 (JP)**
- **TAKIHANA, Yota**
**Tainai-shi, Niigata 959-2691 (JP)**

(74) Representative: **Müller-Boré & Partner Patentanwälte PartG mbB**
**Friedenheimer Brücke 21**
**80639 München (DE)**

(54) **(METH)ACRYLIC ACID NITROXIDE POLYMER PARTICLE, AND METHOD FOR PRODUCING SAME**

(57) A method for manufacturing (meth)acrylic acid nitroxide polymer particles, capable of suppressing the generation of coarse aggregates and deposits, and hence being excellent in productivity is provided.

A method for manufacturing (meth)acrylic acid nitroxide polymer particles, includes: a step a of dispersing a solution in which a (meth)acrylic acid nitroxide polymer (A) is dissolved in a hydrophobic organic solvent in an aqueous medium in a form of oil droplets; a step b of removing the solvent in the oil droplets and thereby obtaining a slurry; and a step c of dehydrating and drying the slurry.

The polymer (A) has a repetitive unit represented by Formula (1); the aqueous medium contains a polyvinyl alcohol-based polymer (B); and a mass ratio (RD) of the PVA-based polymer (B) to the solution, a degree of polymerization (DP) of the PVA-based polymer (B), and a degree of saponification (DS) of the PVA-based polymer (B) satisfy a relationship "$RD \times DP \times (100-DS)^2/100 \geq 850$"

[Formula 1]

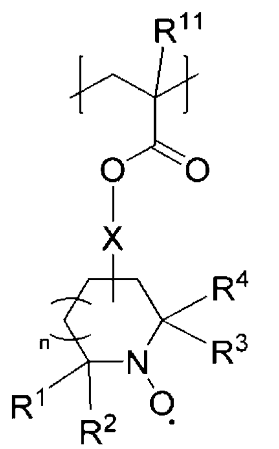

(1)

(in Formula (1), $R^1$, $R^2$, $R^3$ and $R^4$ are each independently a hydrogen atom or an alkyl group having a carbon number of 1 to 6, where: at least one of $R^1$ and $R^2$ is

EP 4 768 523 A1

an alkyl group having a carbon number of 1 to 6; at least one of $R^3$ and $R^4$ is an alkyl group having a carbon number of 1 to 6; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; X represents a single bond or a divalent linking group; and n is 0 or 1).

## Description

### Technical Field

The present disclosure relates to (meth)acrylic acid nitroxide polymer particles and a manufacturing method therefor.

### Background Art

Polymers containing a nitroxide radical structure are attracting attention as active materials for electrodes because they have high energy density, enable a large current to flow therethrough, and have an excellent cycle characteristic. For example, Patent Literature 1 proposes a radical material typified by poly(2,2,6,6-tetramethylpiperidinoxy methacrylate) as an active material for electrodes of secondary batteries.

Further, Patent Literature 2 proposes a $CO_2$ separation apparatus for electrochemically adsorbing and desorbing $CO_2$ by using an electrolyte layer containing a redox compound consisting of a polymer containing a nitroxide radical structure. Further, Patent Literature 3 proposes a method for isolating a polymer containing a nitroxide radical structure by filtration after distillation or decantation thereof.

### Citation List

### Patent Literature

Patent Literature 1: Japanese Unexamined Patent Application Publication No. 2002-304996
Patent Literature 2: Japanese Patent No. 6792969
Patent Literature 3: Japanese Unexamined Patent Application Publication No. 2012-193273

### Summary of Invention

### Technical Problem

For various applications of polymers containing nitroxide radical structures, such as for active materials for electrodes, there is a demand in the market for a technology capable of suppressing coarse aggregates and deposits, and hence being excellent in productivity.

The present disclosure has been made in view of the above-described demand, and an object thereof is to provide (meth)acrylic acid nitroxide polymer particles and a manufacturing method therefor capable of suppressing the generation of coarse aggregates and deposits, and hence being excellent in productivity.

### Solution to Problem

The inventors of the present invention have made diligent studies to achieve the above-described object and consequently completed the present disclosure including forms described below.

[1]: A method for manufacturing (meth)acrylic acid nitroxide polymer particles, including:

a step a of dispersing a solution in which a (meth)acrylic acid nitroxide polymer (A) (hereinafter referred to as a polymer (A)) is dissolved in a hydrophobic organic solvent in an aqueous medium in a form of oil droplets;
a step b of removing the hydrophobic organic solvent in the oil droplets dispersed in the aqueous medium after the step a and thereby obtaining a slurry; and
a step c of dehydrating and drying the slurry after the step b and thereby obtaining (meth)acrylic acid nitroxide polymer particles, in which
the polymer (A) has a repetitive unit represented by Formula (1),
the aqueous medium contains a polyvinyl alcohol-based polymer (B) (hereinafter referred to as a PVA-based polymer (B)), and
a mass ratio (RD) of the PVA-based polymer (B) to the solution in the step a, a degree of polymerization (DP) of the PVA-based polymer (B), and a degree of saponification (DS) of the PVA-based polymer (B) satisfy a below-shown relationship

$$RD \times DP \times (100\text{-}DS)^2/100 \geq 850$$

[Formula 1]

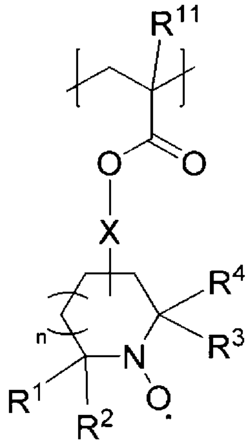

(1)

(in Formula (1), $R^1$, $R^2$, $R^3$ and $R^4$ are each independently a hydrogen atom or an alkyl group having a carbon number of 1 to 6, where: at least one of $R^1$ and $R^2$ is an alkyl group having a carbon number of 1 to 6; at least one of $R^3$ and $R^4$ is an alkyl group having a carbon number of 1 to 6; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; X represents a single bond or a divalent linking group; and n is 0 or 1).

[2]: The method for manufacturing (meth)acrylic acid nitroxide polymer particles described in Item [1], in which a ratio of particles having a volume-based particle diameter of 1,000 μm or larger in a particle size distribution measured by a light scattering method of the (meth)acrylic acid nitroxide polymer (A) in the slurry obtained in the step b is 0 to 5%.

[3]: The method for manufacturing (meth)acrylic acid nitroxide polymer particles described in Item [1] or [2], in which the degree of polymerization of the PVA-based polymer (B) is 500 to 5,000, and the degree of saponification of the PVA-based polymer (B) is 50 to 90 mol%.

[4]: The method for manufacturing (meth)acrylic acid nitroxide polymer particles described in any one of Items [1] to [3], in which a total amount of a vinyl acetate unit and a vinyl alcohol unit of the PVA-based polymer (B) is 95 to 100 mol%.

[5]: (Meth)acrylic acid nitroxide polymer particles containing a (meth)acrylic acid nitroxide polymer (A) (hereinafter referred to as a polymer (A)) having a repetitive unit represented by Formula (1), in which
a volume-average particle diameter of particles in an aqueous dispersion, measured by a light scattering method, is 10 to 1,000 μm, and a ratio of particles having a volume-based particle diameter of 1,000 μm or larger is 0 to 5%.

[Formula 2]

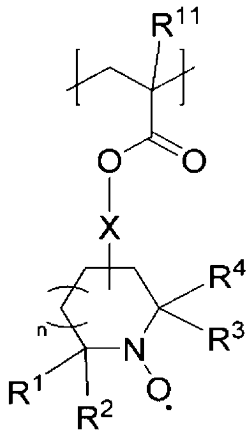

(1)

(where in Formula (1), $R^1$, $R^2$, $R^3$ and $R^4$ are each independently a hydrogen atom or an alkyl group having a carbon number of 1 to 6, where: at least one of $R^1$ and $R^2$ is an alkyl group having a carbon number of 1 to 6; at least one of $R^3$ and $R^4$ is an alkyl group having a carbon number of 1 to 6; $R^1$ and $R^2$ may be bonded to each other and thereby form a

cyclic structure; $R^3$ and $R^4$ may be bonded to each other and thereby form a cyclic structure; $R^{11}$ represents a hydrogen atom or a methyl group; X represents a single bond or a divalent linking group; and n is 0 or 1).

[6]: The (meth)acrylic acid nitroxide polymer particles described in Item [5], further containing 0.001 to 5 mass% of a polyvinyl alcohol-based polymer (B) (hereinafter referred to as a PVA-based polymer (B)).

[7]: The (meth)acrylic acid nitroxide polymer particles described in Item [6], in which a total amount of a vinyl acetate unit and a vinyl alcohol unit in the PVA-based polymer (B) is 95 to 100 mol%.

## Advantageous Effects of Invention

According to the present disclosure, it is possible to provide (meth)acrylic acid nitroxide polymer particles and a manufacturing method therefor capable of suppressing the generation of coarse aggregates and deposits, and hence being excellent in productivity.

## Description of Embodiments

An example of an embodiment to which the present disclosure is applied will be described hereinafter. The present disclosure is not limited to the embodiment, and other embodiments may fall within the scope of the present disclosure as long as they meet the spirit of the present disclosure. Further, numerical values "A to B" specified in this specification include numerical values A and B. Numerical values specified in this specification are values obtained by a method disclosed in embodiments or examples. Further, the terms "sheet" and "film" used in this specification are synonymous with each other. Unless otherwise noted, each of various components described in this specification may be used independently as a single component, or two or more of them may be used in combination. The term "(Meth)acryl" is a generic term for acryl and methacryl. In this specification, unless otherwise specified, a "unit" contained in a polymer is a repetitive unit contained in the polymer, which is a monomer unit derived from a raw-material monomer or a derived unit derived from one or more monomer units.

### 1. (Meth)acrylic acid nitroxide polymer particles

(Meth)acrylic acid nitroxide polymer particles according to the present disclosure (hereinafter also referred to as polymer particles disclosed herein) contain one or more types of (meth)acrylic acid nitroxide polymers (A) (hereinafter also referred to as polymers (A)). The content of the polymer(s) (A) in the polymer particles disclosed herein is preferably 95 to 100 mass%. The lower limit value of the content is more preferably 96 mass%, still more preferably 97 mass%, and particularly preferably 98 mass%. The upper limit value of the content is more preferably 99.9 mass%, still more preferably 99.7 mass%, and particularly preferably 99.5 mass%.

### 1-1. (Meth)acrylic acid nitroxide polymer (A)

The polymer (A) is a polymer containing a (meth)acrylic acid nitroxide unit represented by the below-shown Formula (1) and, when required, one or more types of other monomer units.

[Formula 3]

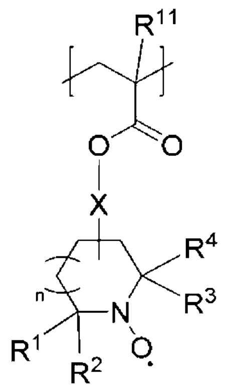

(1)

In Formula (1), $R^1$, $R^2$, $R^3$ and $R^4$ are each independently a hydrogen atom or an alkyl group having a carbon number of 1 to 6, where at least one of $R^1$ and $R^2$ is an alkyl group having a carbon number of 1 to 6, and at least one of $R^3$ and $R^4$ is an alkyl group having a carbon number of 1 to 6. $R^1$ and $R^2$ may be bonded to each other and thereby form a cyclic structure, and $R^3$

and $R^4$ may be bonded to each other and thereby form a cyclic structure. $R^{11}$ represents a hydrogen atom or a methyl group; X represents a single bond or a divalent linking group; and n represents 0 or 1.

The content of the (meth)acrylic acid nitroxide unit in the polymer (A) is not limited to any particular values, and is preferably 50 mass% or more, more preferably 70 mass% or more, still more preferably 90 mass% or more, and may be 100 mass%. The content of the other monomer unit(s) (the total amount in the case of containing a plurality of types) in the polymer (A) is preferably 50 mass% or less, more preferably 30 mass% or less, and still more preferably 10 mass% or less based on the whole structural units.

The method for introducing the (meth)acrylic acid nitroxide unit into the polymer (A) is not limited to any particular methods. For example, there is a method in which a secondary amino group of a polymer containing a secondary amino group-containing (meth)acrylate monomer unit represented by Formula (2) is oxidized and thereby nitroxidized.

[Formula 4]

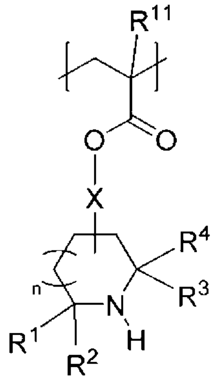

(2)

In Formula (2), $R^1$, $R^2$, $R^3$ and $R^4$ are each independently a hydrogen atom or an alkyl group having a carbon number of 1 to 6, where at least one of $R^1$ and $R^2$ is an alkyl group having a carbon number of 1 to 6, and at least one of $R^3$ and $R^4$ is an alkyl group having a carbon number of 1 to 6. $R^1$ and $R^2$ may be bonded to each other and thereby form a cyclic structure, and $R^3$ and $R^4$ may be bonded to each other and thereby form a cyclic structure. $R^{11}$ represents a hydrogen atom or a methyl group; X represents a single bond or a divalent linking group; and n represents 0 or 1.

Unreacted secondary amino group-containing (meth)acrylate monomer unit may be contained in the polymer (A) after the nitroxidation reaction. The content of the secondary amino group-containing (meth)acrylate monomer unit in the polymer (A) is preferably 20 mass% or less, more preferably 15 mass% or less, and still more preferably 10 mass% or less.

Examples of other monomer units contained in the polymer (A) include, in addition to the secondary amino group-containing (meth)acrylate monomer unit, alkyl methacrylate units such as methyl methacrylate, ethyl methacrylate, and butyl methacrylate; aryl methacrylate units such as phenyl methacrylate; cycloalkyl methacrylate units such as cyclohexyl methacrylate and norbornenyl methacrylate; alkyl acrylate units such as methyl acrylate, ethyl acrylate, propyl acrylate, and butyl acrylate; aryl acrylate units such as phenyl acrylate; cycloalkyl acrylate units such as cyclohexyl acrylate and norbornenyl acrylate; aromatic vinyl monomer units such as styrene and $\alpha$-methylstyrene; acrylamide units; methacrylamide units; and vinyl cyanide monomer units such as acrylonitrile and methacrylonitrile. The method for introducing the other monomer unit(s) is not limited to any particular methods, and examples include a method in which a monomer(s) corresponding to the other monomer unit(s) is copolymerized when the secondary amino group-containing (meth)acrylate monomer is polymerized. Among these monomer units, in view of the thermal-decomposition resistance of the methacrylic copolymer, alkyl methacrylate units, alkyl acrylate units, aromatic vinyl monomer units, and vinyl cyanide monomer units are preferred, and methyl methacrylate, methyl acrylate, and styrene are more preferred.

Meanwhile, in order to improve the solubility of the polymer (A) in the solvent and improve the film-forming property, the polymer (A) preferably does not have a cross-linking structure and preferably does not contain a cross-linkable monomer unit.

The weight-average molecular weight (Mw) of the polymer (A) is not limited to any particular values, and is preferably 1,000 to 200,000 g/mol. The lower limit value of the Mw is more preferably 2,000 g/mol, still more preferably 3,000 g/mol, particularly preferably 4,000 g/mol, and most preferably 5,000 g/mol. The upper limit value of the Mw is more preferably 180,000 g/mol, still more preferably 150,000 g/mol, particularly preferably 130,000 g/mol, and most preferably 100,000 g/mol. When the Mw is 1,000 g/mol or higher, the electrochemical stability of the polymer (A) is improved. When the Mw is 200,000 g/mol or lower, the film-forming property of the polymer particles disclosed herein is improved. The Mw is a value that is calculated by converting a chromatogram measured by gel permeation chromatography (GPC) into a molecular weight in terms of standard polystyrene.

1-2. Volume-average particle diameter of polymer particles disclosed herein

The volume-average particle diameter (hereinafter also referred to as a particle diameter) of the polymer particles disclosed herein is 10 to 1,000 μm. The lower limit of the particle diameter is preferably 20 μm and more preferably 50 μm. The upper limit of the particle diameter is preferably 800 μm and more preferably 700 μm. By adjusting the particle diameter of the polymer particles disclosed herein to the above-described range, the polymer particles are easily dissolved in the solvent, and the coating property of the solution and the film-forming property become excellent. The volume-average particle diameter is obtained by measuring, by a light scattering method, an aqueous dispersion of (meth)acrylic acid nitroxide polymer particles or a dispersion obtained by redispersing the polymer particles disclosed herein in an aqueous medium.

In the polymer particles disclosed herein, a ratio of particles having a volume-based particle diameter of 1,000 μm or larger is 0 to 5%. The upper limit of the ratio is preferably 4% and more preferably 3%. By adjusting the ratio of the polymer particles disclosed herein having a volume-based particle diameter of 1,000 μm or larger to the above-described range, the polymer particles are easily dissolved in the solvent, and the coating property of the solution and the film-forming property become excellent. The above-described ratio is obtained by measuring an aqueous dispersion of (meth)acrylic acid nitroxide polymer particles by a light scattering method.

1-3. Polyvinyl alcohol-based polymer (B)

The polymer particles disclosed herein may further contain a polyvinyl alcohol-based polymer (B) (hereinafter also referred to as a PVA-based polymer (B)). The content of the PVA-based polymer (B) in the polymer particles disclosed herein is preferably 0.001 to 5 mass%. The lower limit value is more preferably 0.002 mass%, still more preferably 0.003 mass%, and particularly preferably 0.005 mass%. The upper limit value is more preferably 4 mass%, still more preferably 3 mass%, and particularly preferably 2 mass%. By containing the PVA-based polymer (B) in the polymer particles disclosed herein, the (meth)acrylic acid nitroxide polymer particles are easily dissolved in the solvent and the film-forming property becomes excellent. Further, by adjusting the content of the PVA-based polymer (B) to 5 mass% or less, electrochemical characteristics of a member using the (meth)acrylic acid nitroxide polymer particles become excellent.

The PVA-based polymer (B) is a polymer having a vinyl alcohol unit and, in some cases, is a polymer having a vinyl alcohol unit and a vinyl alcohol derivative unit. The vinyl alcohol unit is a structural unit that is connected at its vinyl group part and has a hydroxyl group as a side chain. Its derivative unit is not limited to any particular units, and examples include (1) a structural unit in which the hydroxyl group of the vinyl alcohol unit is converted into an acetoxy group, and (2) a structural unit in which two vinyl alcohol units are acetalized. Note that it is sufficient if the structural unit of the vinyl alcohol derivative unit can be derived from a vinyl alcohol unit, or the derivative unit can be converted into vinyl alcohol. That is, the above-described feature does not necessarily mean that the structural unit of the vinyl alcohol derivative unit has to be derived from vinyl alcohol.

Unmodified PVA and/or modified PVA are used as the PVA-based polymer (B). Note that the "unmodified PVA" refers to a polymer obtained by saponifying a vinyl ester homopolymer or a polymer obtained by saponifying two or more types of vinyl ester copolymers. Further, the "modified PVA" refers to a PVA obtained by substituting (including cross-linking) at least a part of the end of the molecule, the main chain, and the side chain of the unmodified PVA with a reactive group or the like, a PVA obtained by saponifying a copolymer of a vinyl ester and another unsaturated ethylenic monomer, or a PVA corresponding to both of them. Among them, the PVA-based polymer (B) is preferably an unmodified PVA.

The modified PVA includes a PVA obtained by saponifying a copolymer of a vinyl ester and another unsaturated ethylenic monomer as described above, and in this case, the PVA contains at least one type of another unsaturated ethylenic monomer unit in addition to the vinyl alcohol unit. There is no particular limitation on the other unsaturated ethylenic monomer(s) as long as it can be copolymerized with a vinyl ester, and examples include ethylene, α-olefin, halogen-containing monomers, carboxylic acid-containing monomers and their anhydrides or esters, (meth)acrylic acid esters, vinyl ethers, sulfonic acid group-containing monomers, amide group-containing monomers, amino group-containing monomers, quaternary ammonium base-containing monomers, silyl group-containing monomers, hydroxyl group-containing monomers, and acetyl group-containing monomers. Only one type of PVA-based polymer (B) may be used, or two or more types thereof may be used in combination.

The total amount of the vinyl acetate unit and the vinyl alcohol unit in the PVA-based polymer (B) is preferably 95 to 100 mol%, more preferably 96 to 100 mol%, particularly preferably 97 to 100 mol%, and most preferably 98 to 100 mol%.

By using the PVA-based polymer (B) as an additive in the aqueous medium, the dispersion stability of droplets containing the polymer (A) in a step a (which will be described later) can be improved. Similarly, by using the PVA-based polymer (B) as an additive in the aqueous medium, the dispersion stability of particles of the polymer (A) in a slurry in a step b can be improved. As a result, the generation of coarse particles can be greatly reduced. Further, the deposition on apparatuses such as a stirring tank can be relatively reduced. As a result, the productivity of the polymer particles disclosed herein can be remarkably increased, and polymer particles having excellent quality can be manufactured.

(Viscosity-Average Degree of Polymerization)

The viscosity average degree of polymerization (hereinafter also referred to as a degree of polymerization) of the PVA-based polymer (B) is preferably 500 to 5,000. The lower limit of the degree of polymerization is more preferably 600, still more preferably 700, particularly preferably 1,000, and most preferably 1,500. The upper limit of the degree of polymerization is more preferably 4,000 and still more preferably 3,000. By adjusting the degree of polymerization to 500 or higher, the decrease in yield in a slurrying step (which will be described later) can be prevented or reduced. Further, by adjusting the degree of polymerization to 5,000 or lower, the decrease in solubility of the PVA-based polymer (B) is prevented or reduced, so that the productivity in the slurrying step becomes excellent. The degree of polymerization of the PVA-based polymer (B) is a value measured by a method described in "3.7 Average Degree of Polymerization" in JIS K6726 (1994).

(Degree of Saponification)

The degree of saponification of the PVA-based polymer (B) is preferably 50 to 90 mol%. The lower limit of the degree of saponification is more preferably 60 mol% and still more preferably 70 mol%. The upper limit of the degree of saponification is more preferably 88 mol% and still more preferably 85 mol%. By adjusting the degree of saponification to 50 mol% or higher, the solubility in water becomes excellent, so that an aqueous solution of the PVA-based polymer (B) can be easily prepared. Further, by adjusting the degree of saponification to 90 mol% or lower, the yield in the slurrying step (which will be described later) tends to be improved. The degree of saponification of the PVA-based polymer (B) is a value measured by a method described in "3.5 Degree of Saponification" in JIS K6726 (1994).

The content of the PVA-based polymer (B) in the (meth)acrylic acid nitroxide polymer particles is obtained by, for example, a Soxhlet extraction. Specifically, (meth)acrylic acid nitroxide polymer particles are used as a sample. Then, the PVA-based polymer (B) contained in the (meth)acrylic acid nitroxide polymer particles is extracted in a Soxhlet extractor by using a solvent (e.g., water) in which the PVA-based polymer (B) is dissolved, but components other than the PVA-based polymer (B) are not substantially dissolved. Then, the mass of solid content obtained by concentrating the solution (e.g., aqueous solution) after the extraction and drying it in a vacuum is accurately weighed, and then, the mass of the extracted solid content based on the mass of the (meth)acrylic acid nitroxide polymer particles before the extraction is calculated.

Note that in the case where a component(s) that is soluble in the solvent (e.g., hot water), for which the extraction is performed, other than the PVA-based polymer (B) is contained in the (meth)acrylic acid nitroxide polymer particles, the component(s) may be extracted in the Soxhlet extraction. In such a case, the content of the PVA-based polymer (B) in the extract obtained by the Soxhlet extraction operation may be separately obtained by analyzing the extract by infrared spectroscopy (IR) or the like and calculating a difference between its spectrum and the spectrum of the PVA-based polymer (B). Then, the content of the PVA-based polymer (B) in the (meth)acrylic acid nitroxide polymer particles may be corrected based on the obtained content of the PVA-based polymer (B).

2. Method for manufacturing (meth)acrylic acid nitroxide polymer particles

The method for manufacturing the polymer particles disclosed herein includes:

(1) a step a of dispersing a solution in which a polymer (A) is dissolved in a hydrophobic organic solvent in an aqueous medium containing a PVA-based polymer (B) in the form of oil droplets;
(2) a step b of removing the hydrophobic organic solvent in the oil droplets dispersed in the aqueous medium after the step a and thereby obtaining a slurry; and
(3) a step c of dehydrating and drying the slurry after the step b and thereby obtaining (meth)acrylic acid nitroxide polymer particles.

According to the manufacturing method in accordance with the present disclosure, in which a solution in which a polymer (A) is dissolved in a hydrophobic organic solvent is dispersed in an aqueous medium containing a PVA-based polymer (B) in the form of oil droplets, and after that, the hydrophobic organic solvent in the oil droplets is removed, the dispersion stability of the droplets in the aqueous medium can be remarkably improved, so that the generation of coarse particles in the droplet step b can be remarkably suppressed. Further, in the step b, the deposits on apparatuses such as a stirring tank and stirring blades can be greatly reduced compared to the aqueous medium containing the PVA-based polymer (B). As a result, the polymer particles disclosed herein obtained through the steps (a) to (c) make it possible to suppress the generation of coarse aggregates and deposits, so that the productivity becomes excellent.

2-1. Step a

The step a is a step of dispersing a solution in which a polymer (A) is dissolved in a hydrophobic organic solvent in an aqueous medium containing a PVA-based polymer (B) in the form of oil droplets. In the step a, there is no particular limitation on the method for dispersing a solution in an aqueous medium containing a PVA-based polymer (B) in the form of oil droplets, and preferred examples include a method including preparing a solution in which a polymer (A) is dissolved in a hydrophobic organic solvent, separately preparing an aqueous medium containing a PVA-based polymer (B), and then mixing these solutions.

The method for preparing a solution in which a polymer (A) is dissolved in a hydrophobic organic solvent is not limited to any particular methods. For example, there are a method in which a solid polymer (A) is mixed with and dissolved in a hydrophobic organic solvent, and a method in which a solution in which a polymer (A) is dissolved in a hydrophobic organic solvent is obtained by synthesizing the polymer (A) in the presence of a hydrophobic organic solvent.

The hydrophobic organic solvent used in the step a is not limited to any particular solvents as long as the solvent is immiscible with water, and examples include toluene, xylene, chloroform, and methylene chloride. Note that this solution may contain, in addition to the polymer (A), an additive(s) that is soluble in the used hydrophobic organic solvent within a range in which it does not deviate from the spirit of the present disclosure.

In the preparation of the aqueous medium containing the PVA-based polymer (B), the mixing temperature of the PVA-based polymer (B) and water is not limited to any particular temperatures, and is preferably 40 to 120°C in order to sufficiently dissolve the PVA-based polymer (B) in the water. The lower limit of the temperature is more preferably 45°C and still more preferably 50°C The upper limit of the temperature is more preferably 110°C and still more preferably 100°C Note that it is preferred to sufficiently stir the PVA-based polymer (B) and water and thereby sufficiently dissolves the PVA-based polymer (B) in the water. Further, to do so, the stirring time is preferably 0.5 to 5 hours, more preferably 1 to 4 hours, and still more preferably 1 to 3 hours. Note that the aqueous medium may contain, in addition to the PVA-based polymer (B), an additive(s) that is soluble in the aqueous medium within a range in which it does not deviate from the spirit of the present disclosure.

The mass ratio (RD) of the PVA-based polymer (B) to the solution in which the polymer (A) is dissolved in the hydrophobic organic solvent is preferably 0.01 to 5 mass%. The lower limit of the RD is more preferably 0.02 mass% and still more preferably 0.03%. The upper limit of the RD is more preferably 4 mass% and still more preferably 3 mass%. By adjusting the RD to 0.01 to 5 mass%, the suspension state is stabilized, so that the generation of aggregates and deposits can be suppressed.

In the manufacturing method according to the present disclosure, the ratio (RD) of the PVA-based polymer (B) to 100 mass% of the solution in which the polymer (A) is dissolved in the hydrophobic organic solvent, the degree of polymerization (DP) of the PVA-based polymer (B), and the degree of saponification (DS) of the PVA-based polymer (B) need to satisfy the below-shown relationship

$$RD \times DP \times (100\text{-}DS)^2/100 \geq 850$$

The term "RD×DP×(100-DS)$^2$/100" is 850 or larger, preferably 900 or larger, more preferably 950 or larger, and particularly preferably 1,000 or larger.

By adjusting term "RD×DP×(100-DS)$^2$/100" to 850 or larger, the suspension state can be stabilized, and the generation of aggregates and deposits can be suppressed. The upper limit is not limited to any particular values, and is typically 600,000 or smaller.

The method for dispersing a solution in which a polymer (A) is dissolved in a hydrophobic organic solvent in an aqueous medium containing a PVA-based polymer (B) can be carried out by an ordinary method. Examples include stirring in a reaction container equipped with stirring blades; use of an emulsification apparatus such as a highpressure homogenizer, a colloid mill, an ultrasonic emulsifier, a homomixer, and a homodisper; a membrane emulsification method using a porous material such as an SPG (Shirasu Porous Glass) membrane; and an emulsification method using a phase transition phenomenon such as a phase-inversion emulsification method and a phase-inversion temperature emulsification method.

2-2. Step b

The step b is a step of removing the hydrophobic organic solvent from the aqueous medium in which the oil phase (oil droplets) prepared in the step a is dispersed, and thereby forming an aqueous slurry of particles containing the polymer (A). In this specification, the particles obtained in the step b are referred to as "particles of (meth)acrylic acid nitroxide polymer (A)" in order to distinguish them from the (meth)acrylic acid nitroxide polymer particles containing a specific amount of the PVA-based polymer, obtained in the step c.

The method for removing the hydrophobic organic solvent in the step b is not limited to any particular methods. For example, there is a method in which the hydrophobic organic solvent is vaporized and removed by heating or/and reducing the pressure of the suspension obtained in the step a while stirring it. The conditions for the heating, the decompressing, and the like in this process may be determined based on general knowledge according to the boiling point, the vapor pressure, the azeotropic condition, and the like of the used hydrophobic organic solvent.
In the step b, an additive(s) other than the polymer (A) and the PVA-based polymer (B) may be added to the hydrophobic organic solvent phase or the aqueous medium phase as required within a range in which it does not deviate from the spirit of the present disclosure. Examples of additives include a defoaming agent, a thickening agent, and a surfactant. Examples of defoaming agents include mineral oilbased agents, oil-and-fat-based defoaming agents, fatty acid-based defoaming agents, fatty acid ester-based defoaming agents, alcohol-based defoaming agents, amide-based defoaming agents, phosphate ester-based defoaming agents, metal soap-based defoaming agents, silicone-based defoaming agents, and oxyalkylene-based defoaming agents.
The volume-average particle diameter (hereinafter also referred to as a particle diameter) of the particles of the polymer (A) in the slurry obtained in the step b is not limited to any particular values, and is preferably 10 to 1,000 μm. The lower limit of the particle diameter is more preferably 20 μm and still more preferably 50 μm. The upper limit of the particle diameter is more preferably 800 μm and still more preferably 700 μm. By adjusting the particle diameter of the polymer particles disclosed herein to the above-described range, the coating property of the solution becomes excellent. The volume-average particle diameter is obtained by measuring the particles of the polymer (A) in the slurry obtained in the step b by a light scattering method. Note that the volume-average particle diameter of the polymer particles disclosed herein obtained in the step c is smaller than that of the particles of the polymer (A) in the slurry obtained in the step b when the volume-average particle diameter is not adjusted by filtration using a mesh or the like, and is substantially equal to that of the particles of the polymer (A) in the slurry obtained in the step b when such an adjustment is not performed.
The ratio of particles of the polymer (A) in the slurry obtained in the step b having a volume-based particle diameter of 1,000 μm or larger is preferably 0 to 5%. The upper limit of the ratio is more preferably 4% and still more preferably 3%. By adjusting the ratio of particles of the polymer (A) having a volume-based particle diameter of 1,000 μm or larger in the slurry obtained in the step b to the above-described range, the coating property of the solution becomes excellent.

2-3. Step c

The step c is a step of dehydrating, drying, and thereby removing the aqueous medium from the aqueous slurry containing particles of the polymer (A) obtained in the step b, and thereby obtaining particles containing the polymer (A).
An ordinary method for a solid-liquid separation can be adopted for the above-described dehydration operation. For example, there are methods for a solid-liquid separation by centrifugal filtration or pressurized filtration.
The drying operation is performed to remove water contained in the particles containing the polymer (A) after the dehydration operation. The method for the aforementioned operation is not limited to any particular method, and there are, for example, methods for evaporating and removing water by heating and/or reducing the pressure.

## Examples

Next, the present disclosure will be described in a more specific manner by showing examples. Note that the present disclosure is not limited by the examples.

<Method for Measuring Physical Properties>

(i) Weight-average molecular weight (Mw)

A sample solution was prepared by dissolving 12 mg of a toluene solution containing 30 mass% of a polymer (A) in 5 mL of tetrahydrofuran. The temperature of a column oven was set to 40°C, and a chromatogram was measured by injecting 20 μL of the sample solution into the apparatus at an eluent flow rate of 0.35 mL/min. Standard polystyrenes having molecular weights in a range of 400 to 5,000,000 g/mol were GPC-measured at 10 points, and a calibration curve showing a relationship between the retention time and the molecular weight was created. The Mw of the resin to be measured was determined based on this calibration curve.
Apparatus: GPC apparatus HLC-8320 manufactured by Tosoh Corporation.

Separation column: TSK guard column Super HZ-H, TSK gel HZM-M, and TSK gel Super HZ4000 manufactured by Tosoh Corporation were connected in series
Eluent: tetrahydrofuran Eluent flow rate: 0.35 mL/min

Column temperature: 40°C
Detection method: differential refractive index (RI)

(ii) Volume-average particle diameter

By using the slurry obtained in the step b, the volume-average particle diameter (median diameter) of the particles of the (meth)acrylic acid nitroxide polymer in the slurry obtained in the step b was obtained by a light scattering method using a laser diffraction/scattering-type particle diameter distribution measuring apparatus LA-950V2 manufactured by HORIBA. The cumulative frequency of the particles of the (meth)acrylic acid nitroxide polymer in the slurry obtained in the step b that had a volume-based particle diameter of 1,000 μm or larger was obtained from the obtained particle size distribution.

(iii) Slurry yield

In the step of obtaining the slurry containing (meth)acrylic acid nitroxide polymer particles, deposits deposited on the stirring tank and the stirring blades were collected. Further, the obtained slurry was filtered by wire netting of 20 mesh (mesh opening 0.98 mm), and the residue on the mesh was collected as coarse aggregates. The liquid which had passed through the mesh was filtered by using qualitative filter paper (No. 131 manufactured by Advantec), and the residue on the filter paper was collected as (meth)acrylic acid nitroxide polymer particles. Each of the (meth)acrylic acid nitroxide polymer particles, the deposits, and the coarse aggregates was dried in a vacuum dryer at 80°C for 24 hours. After that, their masses were measured, and the measured masses were used as the yield, the amount of deposits, and the amount of coarse aggregates, respectively. The slurry yield was calculated by the below-shown formula.

Slurry yield (%) = Yield/(Yield + Amount of deposits + Amount of coarse aggregates)

(iv) Content of PVA-based polymer (B)

4.5 g of (meth)acrylic acid nitroxide polymer particles were accurately weighed, and a Soxhlet extraction was performed with water (the number of times of reflux: 100). The aqueous solution after the extraction was concentrated and dried in a vacuum, and the obtained solid content was accurately weighed. The ratio of the mass of the extracted solid content to the mass of the (meth)acrylic acid nitroxide polymer particles was calculated, and the calculated ratio was used as the content of the PVA-based polymer (B).

(v) Film-forming property

20 g of toluene was added to 5 g of (meth)acrylic acid nitroxide polymer particles, and the mixture was stirred by a magnetic stirrer for 30 minutes. The obtained solution was applied to a PET film by using a stainless-steel applicator having a clearance of 200 μm, and the PET film with the solution applied thereto was heated and dried in a box-type dryer of which the temperature was set to 100°C for 1 hour. The obtained film was peeled off from the PET film, observed by an optical microscope. By doing so, the number of defects in a range of 100 mm × 100 mm was obtained. The film-forming property was determined according to the following criteria. ∘: Number of defects is less than 10; and ×: Number of defects is 10 or greater.

<Raw Material>

The following raw materials were used in Examples and Comparative Examples.

LA-87: ADK STB LA-87 (Compound name: 2,2,6,6,-tetramethyl-4-piperidyl methacrylate) manufactured by ADEKA.
Polyvinyl alcohol (B-1): polyvinyl alcohol having an average degree of polymerization of 2,600 and a degree of saponification of 80 mol%
Polyvinyl alcohol (B-2): polyvinyl alcohol having an average degree of polymerization of 1,700 and a degree of saponification of 88 mol%
Polyvinyl alcohol (B-3): polyvinyl alcohol having an average degree of polymerization of 500 and a degree of saponification of 98 mol%
Nonionic dispersant: "EMULGEN 150" manufactured by Kao Corporation.

(Manufacturing Example 1: (meth)acrylic acid nitroxide polymer (A-1))

98 mass parts of toluene, 100 mass parts of LA-87, and 0.62 mass parts of n-octylmercaptan (nOM) were charged into an autoclave equipped with a stirrer under a nitrogen atmosphere. Then, the mixture was heated to 100°C and homogeneously dissolved. Next, at the same temperature, a solution in which 0.02 mass parts of azobisisobutyronitrile (AIBN) was dissolved in 0.4 mass parts of toluene was press-injected, and the reaction was continued for 1 hour. Further, an operation in which a solution in which 0.02 mass parts of AIBN was dissolved in 0.4 mass parts of toluene was additionally press-injected, and the reaction was continued for 1 hour was repeated four times. Then, the autoclave was cooled to a room temperature, and a precursor polymer (AA-1) solution was obtained. The polymerization conversion ratio was 93%.

An aqueous solution in which 100 mass parts of the precursor polymer (AA-1) solution, 57.2 mass parts of toluene, 2.0 mass parts of methyltri-n-octylammonium chloride, and 2.1 mass parts of sodium tungstate dihydrate were dissolved in 14.8 mass parts of ion-exchanged water was charged into a reactor equipped with stirring blades, a cooling tube, and a dropping funnel under a nitrogen atmosphere, and the mixture was heated to 40°C while stirring it. After dropping (i.e., adding) 94 mass parts of a 30% hydrogen peroxide solution over 3 hours, the reaction was continued for 8 hours. The reactor was cooled to a room temperature, and the stirring was stopped and the reaction solution was left undisturbed. Then, the lower layer of the reaction solution, which had been separated into two layers, was removed. 63 mass parts of ion-exchanged water was added in the reactor. After stirring the mixture for 15 minutes, the stirring was stopped and the solution was left undisturbed, and then, the lower layer was removed. The above-described washing operation was repeated three times or more. After confirming that the concentration of hydrogen peroxide in the removed lower layer (aqueous layer) was 0.2 mg/L or lower by a test paper, the upper-layer solution was taken out, and a toluene solution containing 30 mass% of a (meth)acrylic acid nitroxide polymer (A-1) was obtained. The Mw was 22,000 g/mol.

(Manufacturing Example 2)

A toluene solution containing 30 mass% of a (meth)acrylic acid nitroxide polymer (A-2) was obtained in the same manner as in Manufacturing Example 1, except that the amount of n-octylmercaptan used in the polymerization raw materials was changed to 0.2 mass parts. The Mw was 61,000 g/mol.

(Manufacturing Example 3)

A toluene solution containing 30 mass% of a (meth)acrylic acid nitroxide polymer (A-3) was obtained in the same manner as in Manufacturing Example 1, except that the amount of n-octylmercaptan used in the polymerization raw materials was changed to 1.8 mass parts. The Mw was 11,000 g/mol.

(Example 1)

200 mass parts of ion-exchanged water and 0.3 mass parts of polyvinyl alcohol (B-1) were added in a reactor equipped with a distillation device consisting of stirring blades, a Claisen head, and a Liebig condenser under a nitrogen atmosphere. Then, the mixture was heated to 60°C and homogeneously dissolved. After the reactor was cooled to 30°C or lower, 100 mass parts of a toluene solution containing 30 mass% of the (meth)acrylic acid nitroxide polymer (A-1) was added in the reactor. Then, the mixture was stirred at 300 rpm, and the reactor was heated to 110°C After confirming that there was no more distillate of toluene from the distiller, the reactor was cooled, and a slurry of particles of the (meth)acrylic acid nitroxide polymer (A-1) was obtained. Particles of the (meth)acrylic acid nitroxide polymer (A-1) were obtained by filtering the slurry by qualitative filter paper (No. 131 manufactured by Advantec), and drying the filtered powder in a vacuum dryer of which the temperature was set to 80°C for 24 hours. Evaluations results are shown in Table 1.

(Examples 2 to 9)

(Meth)acrylic acid nitroxide polymer particles were obtained by the same method as in Example 1, except for the formulation shown in Table 1. Evaluations results are shown in Table 1.

(Comparative Examples 1 to 5)

It was attempted to manufacture (meth)acrylic acid nitroxide polymer particles by the same method as in Example 1, except for the formulation shown in Table 1. However, large numbers of deposits and coarse aggregates were generated in the slurrying step, so that it was impossible to measure the volume-average particle diameter and the particle size distribution of the polymer particles. Evaluations results are shown in Table 1.

[Table 1]

Table 1

| Item | | | Unit | Example | | | | | | | | | Comparative Example | | | | |
|---|---|---|---|---|---|---|---|---|---|---|---|---|---|---|---|---|---|
| | | | | 1 | 2 | 3 | 4 | 5 | 6 | 7 | 8 | 9 | 1 | 2 | 3 | 4 | 5 |
| Raw material | Polymer (A) | A-1 | mass part | 30 | 30 | 30 | 10 | 10 | | | | | | | | | |
| | | A-2 | mass part | | | | | | 10 | | 10 | 10 | 10 | 10 | 10 | 10 | 10 |
| | | A-3 | mass part | | | | | | | 30 | | | | | | | |
| | Hydrophobic organic solvent | Toluene | mass part | 70 | 70 | 70 | 90 | 90 | 90 | 70 | 90 | 90 | 90 | 90 | 90 | 90 | 90 |
| | Ion-exchanged water | | mass part | 200 | 200 | 200 | 200 | 200 | 200 | 200 | 200 | 150 | 200 | 200 | 200 | 1000 | 1000 |
| | PVA-based polymer (B) | B-1 | mass part | 0.3 | 0.9 | 1.5 | 0.3 | 0.1 | 0.3 | 0.3 | | | | | | | |
| | | B-2 | mass part | | | | | | | | 0.5 | 0.5 | 0.1 | 0.3 | | | |
| | | B-3 | mass part | | | | | | | | | | | | 0.5 | | |
| | Nonionic dispersant | Emulgen 150 | mass part | | | | | | | | | | | | | 0.25 | 3 |

(continued)

| Item | | Unit | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 |
|---|---|---|---|---|---|---|---|---|---|---|---|---|---|---|---|---|
| Condition | Mw of polymer (A) | g/mol | 22000 | 22000 | 22000 | 22000 | 22000 | 61000 | 11000 | 61000 | 61000 | 61000 | 61000 | 22000 | 61000 | 61000 |
| | Ratio (RD) of PVA-based polymer (B) or the like to solution in step a | mass% | 0.3 | 0.9 | 1.5 | 0.3 | 0.1 | 0.3 | 0.3 | 0.5 | 0.5 | 0.1 | 0.3 | 0.5 | 0.25 | 3 |
| | Degree of polymerization (DP) of PVA-based polymer (B) | - | 2600 | 2600 | 2600 | 2600 | 2600 | 2600 | 2600 | 1700 | 1700 | 1700 | 1700 | 1700 | - | - |
| | Degree of saponification (DS) of PVA-based polymer (B) | mol % | 80 | 80 | 80 | 80 | 80 | 80 | 80 | 88 | 88 | 88 | 88 | 98 | - | - |
| | $RD \times DP \times (100\text{-}DS)^2/100$ | - | 3120 | 9360 | 15600 | 3120 | 1040 | 3120 | 3120 | 1224 | 1224 | 244.8 | 734.4 | 34 | - | - |
| Evaluation | Slurry yield | % | 95 | 89 | 87 | 97 | 94 | 93 | 98 | 92 | 90 | 41 | 51 | 0 | 0 | 0 |
| | Volume-average particle diameter | μm | 133 | 71 | 66 | 89 | 89 | 220 | 102 | 81 | 117 | - | - | - | - | - |
| | Ratio of particles having volume-based particle diameter of 1000 μm or larger | % | 0 | 0 | 0 | 0 | 0 | 0 | 0 | 0 | 0 | - | - | - | - | - |
| | Content of PVA-based polymer (B) in (meth)acrylic acid nitroxide polymer particles | mass% | 0.2 | 0.6 | 1.0 | 0.6 | 0.2 | 0.6 | 0.2 | 1.0 | 1.0 | - | - | - | - | - |
| | Film forming property | - | ○ | ○ | ○ | ○ | ○ | ○ | ○ | ○ | ○ | × | × | × | × | × |

Note that the symbol "-" in the table means that measurement was impossible, that the item is not to be measured, or that there is no unit.

As shown in Table 1, in the manufacturing method according to each of Examples 1 to 9, the amounts of deposits and coarse aggregates generated in the slurrying step were small; the slurry yield was excellent; and the productivity was excellent. Further, the obtained (meth)acrylic acid nitroxide polymer particles contained few coarse particles and were excellent in handling property. In contrast, in the manufacturing method according to each of Comparative Examples 1 to 5, large numbers of deposits and/or coarse aggregates were generated in the slurrying step; the yield was low; and the productivity was poor.

This application is based upon and claims the benefit of priority from Japanese patent application No. 2023-136705, filed on August 25, 2023, the disclosure of which is incorporated herein in its entirety by reference.

## Industrial Applicability

(Meth)acrylic acid nitroxide polymer particles according to the present disclosure have high energy density, enable a large current to flow therethrough, and have an excellent cycle characteristic, so that they can be used in various fields, such as for active materials for electrodes.

## Claims

1. A method for manufacturing (meth)acrylic acid nitroxide polymer particles, comprising:

    a step a of dispersing a solution in which a (meth)acrylic acid nitroxide polymer (A) (hereinafter referred to as a polymer (A)) is dissolved in a hydrophobic organic solvent in an aqueous medium in a form of oil droplets;
    a step b of removing the hydrophobic organic solvent in the oil droplets dispersed in the aqueous medium after the step a and thereby obtaining a slurry; and
    a step c of dehydrating and drying the slurry after the step b and thereby obtaining (meth)acrylic acid nitroxide polymer particles, wherein
    the polymer (A) has a repetitive unit represented by Formula (1),
    the aqueous medium contains a polyvinyl alcohol-based polymer (B) (hereinafter referred to as a PVA-based polymer (B)), and
    a mass ratio (RD) of the PVA-based polymer (B) to the solution in the step a, a degree of polymerization (DP) of the PVA-based polymer (B), and a degree of saponification (DS) of the PVA-based polymer (B) satisfy a below-shown relationship

$$RD \times DP \times (100-DS)^2/100 \geq 850$$

[Formula 1]

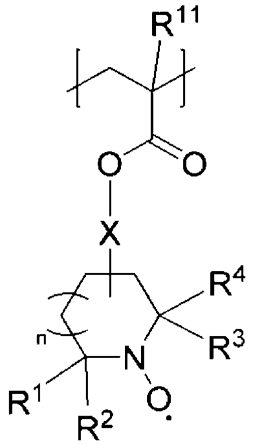

(1)

(in Formula (1), $R^1$, $R^2$, $R^3$ and $R^4$ are each independently a hydrogen atom or an alkyl group having a carbon number of 1 to 6, where: at least one of $R^1$ and $R^2$ is an alkyl group having a carbon number of 1 to 6; at least one of $R^3$ and $R^4$ is an alkyl group having a carbon number of 1 to 6; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; X represents a single bond or a divalent linking group; and n is 0 or 1).

2. The method for manufacturing (meth)acrylic acid nitroxide polymer particles according to claim 1, wherein a ratio of particles having a volume-based particle diameter of 1,000 μm or larger in a particle size distribution measured by a light scattering method of the (meth)acrylic acid nitroxide polymer (A) in the slurry obtained in the step b is 0 to 5%.

3. The method for manufacturing (meth)acrylic acid nitroxide polymer particles according to claim 1, wherein the degree of polymerization of the PVA-based polymer (B) is 500 to 5,000, and the degree of saponification of the PVA-based polymer (B) is 50 to 90 mol%.

4. The method for manufacturing (meth)acrylic acid nitroxide polymer particles according to claim 1, wherein a total amount of a vinyl acetate unit and a vinyl alcohol unit of the PVA-based polymer (B) is 95 to 100 mol%.

5. (Meth)acrylic acid nitroxide polymer particles containing a (meth)acrylic acid nitroxide polymer (A) (hereinafter referred to as a polymer (A)) having a repetitive unit represented by Formula (1), wherein
a volume-average particle diameter of particles in an aqueous dispersion, measured by a light scattering method, is 10 to 1,000 μm, and a ratio of particles having a volume-based particle diameter of 1,000 μm or larger is 0 to 5%.

[Formula 2]

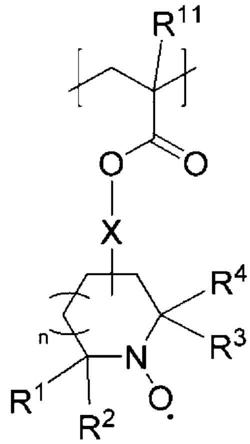

(1)

(where in Formula (1), $R^1$, $R^2$, $R^3$ and $R^4$ are each independently a hydrogen atom or an alkyl group having a carbon number of 1 to 6, where: at least one of $R^1$ and $R^2$ is an alkyl group having a carbon number of 1 to 6; at least one of $R^3$ and $R^4$ is an alkyl group having a carbon number of 1 to 6; $R^1$ and $R^2$ may be bonded to each other and thereby form a cyclic structure; $R^3$ and $R^4$ may be bonded to each other and thereby form a cyclic structure; $R^{11}$ represents a hydrogen atom or a methyl group; X represents a single bond or a divalent linking group; and n is 0 or 1).

6. The (meth)acrylic acid nitroxide polymer particles according to claim 5, further containing 0.001 to 5 mass% of a polyvinyl alcohol-based polymer (B) (hereinafter referred to as a PVA-based polymer (B)).

7. The (meth)acrylic acid nitroxide polymer particles according to claim 6, wherein a total amount of a vinyl acetate unit and a vinyl alcohol unit in the PVA-based polymer (B) is 95 to 100 mol%.

## INTERNATIONAL SEARCH REPORT

International application No.
**PCT/JP2024/029922**

**A. CLASSIFICATION OF SUBJECT MATTER**

***C08J 3/16***(2006.01)i; ***C08F 8/06***(2006.01)i; ***C08F 20/34***(2006.01)i; ***C08L 29/04***(2006.01)i; ***C08L 33/14***(2006.01)i
FI: C08J3/16 CEY; C08F8/06; C08L33/14; C08L29/04 C; C08F20/34

According to International Patent Classification (IPC) or to both national classification and IPC

**B. FIELDS SEARCHED**

Minimum documentation searched (classification system followed by classification symbols)

C08J3/12-3/16; C08K3/00-13/08; C08L1/00-101/14; C08C19/00-19/44, C08F6/00-246/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-115290 A (KURARAY CO., LTD.) 26 July 2018 (2018-07-26) entire text, particularly, claims, paragraphs [0056], [0129]-[0163] | 5 |
| A | WO 2020/017631 A1 (KURARAY CO., LTD.) 23 January 2020 (2020-01-23) entire text | 1-7 |
| A | JP 2010-185071 A (SUMITOMO SEIKA CHEMICALS CO., LTD.) 26 August 2010 (2010-08-26) entire text | 1-7 |
| A | JP 2020-117647 A (KURARAY CO., LTD.) 06 August 2020 (2020-08-06) entire text | 1-7 |
| A | WO 2020/017630 A1 (NEC CORPORATION) 23 January 2020 (2020-01-23) entire text | 1-7 |

☐ Further documents are listed in the continuation of Box C.
☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/029922**

| Patent document cited in search report | Publication date (day/month/year) | Patent family member(s) | Publication date (day/month/year) |
|---|---|---|---|
| JP 2018-115290 A | 26 July 2018 | (Family: none) | |
| WO 2020/017631 A1 | 23 January 2020 | TW 202012468 A | |
| JP 2010-185071 A | 26 August 2010 | (Family: none) | |
| JP 2020-117647 A | 06 August 2020 | (Family: none) | |
| WO 2020/017630 A1 | 23 January 2020 | US 2021/0273226 A1<br>entire text<br>TW 202012457 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002304996 A
- JP 6792969 B
- JP 2012193273 A
- JP 2023136705 A

### Non-patent literature cited in the description

- 3.7 Average Degree of Polymerization. *JIS K6726*, 1994
- 3.5 Degree of Saponification. *JIS K6726*, 1994